# EUROPEAN PATENT APPLICATION

(11) **EP 4 079 794 A1**
(43) Date of publication of application: **26.10.2022**
(21) Application number: 20903557.5
(22) Date of filing: 02.11.2020
(51) Int. Cl.: C08J 5/18, B30B 15/02

(54) **HEAT-RESISTANT BUFFER SHEET AND HOT-PRESSURIZING TREATMENT METHOD**

(30) Priority: 20.12.2019 JP 2019230551
(71) Applicant: NITTO DENKO CORPORATION, Ibaraki-shi Osaka 567-8680 (JP)
(72) Inventor: MURAKI Yuuzou, Ibaraki-shi, Osaka 567-8680 (JP); AKIBA Kurato, Ibaraki-shi, Osaka 567-8680 (JP)
(74) Representative: Müller-Boré & Partner Patentanwälte PartG mbB
(86) International application number: PCT/JP2020/041120
(87) International publication number: WO 2021/124712

(57) **Abstract**

A provided heat-resistant cushioning sheet is a heat-resistant cushioning sheet configured to be disposed between a thermocompression face of a thermocompression apparatus and a target in thermocompression treatment of the target to prevent direct contact between the target and the thermocompression face, wherein a compression strain change amount ΔS₂₅₀ being a difference S₂₅₀ - S₂₅ between a compression strain S25 at 25°C and a compression strain S₂₅₀ at 250°C is -5% or more. S₂₅ and S₂₅₀ are each a compression strain S_{T} of the heat-resistant cushioning sheet evaluated by thermomechanical analysis (TMA), S₂₅ is evaluated at an evaluation temperature of 25°C, and S₂₅₀ is evaluated at an evaluation temperature of 250°C. The compression strain S_{T} is determined by an equation S_{T} = (t₁ - t₀)/t₀ × 100 (%), where to is a thickness of the heat-resistant cushioning sheet at 25°C and t₁ is a thickness of the heat-resistant cushioning sheet at the evaluation temperature T (°C) under a compression force applied by TMA in a thickness direction of the heat-resistant cushioning sheet. The above heat-resistant cushioning sheet can be more reliably adapted to expected further increases in treatment temperature and pressure.

## Description

### TECHNICAL FIELD

The present invention relates to a heat-resistant cushioning sheet and a thermocompression treatment method using the heat-resistant cushioning sheet.

### BACKGROUND ART

Fluorine resins are known as heat-resistant resins. Patent Literature 1 discloses a cut sheet made of polytetrafluoroethylene (hereinafter referred to as "PTFE") which is a type of fluorine resin. The PTFE sheet, which is a heat-resistant resin sheet, is expected to be used under high temperatures.

### CITATION LIST

### Patent Literature

Patent Literature 1: JP 2001-341138 A

### SUMMARY OF INVENTION

### Technical Problem

A target may be subjected to thermocompression treatment using a thermocompression apparatus. For the thermocompression treatment, it is conceivable that a heat-resistant cushioning sheet is disposed between a thermocompression face of the thermocompression apparatus and the target (target to be treated) to prevent direct contact between the target and the thermocompression face and that a heat-resistant resin sheet, such as the PTFE sheet of Patent Literature 1, is used as a heat-resistant cushioning sheet. However, according to studies by the present inventors, the PTFE sheet of Patent Literature 1 cannot necessarily be adapted sufficiently to expected further increases in treatment temperature and pressure.

The present invention aims to provide a heat-resistant cushioning sheet configured to be provided between a thermocompression face of a thermocompression apparatus and a target in thermocompression treatment of the target to prevent direct contact between the target and the thermocompression face, the heat-resistant cushioning sheet being adaptable more reliably to expected further increases in treatment temperature and pressure.

### Solution to Problem

The present invention provides a heat-resistant cushioning sheet configured to be disposed between a thermocompression face of a thermocompression apparatus and a target in thermocompression treatment of the target to prevent direct contact between the target and the thermocompression face, wherein
a compression strain change amount ΔS₂₅₀ being a difference S₂₅₀ - S₂₅ between a compression strain S₂₅ at 25°C and a compression strain S₂₅₀ at 250°C is -5% or more,
S₂₅ and S₂₅₀ are each a compression strain S_{T} of the heat-resistant cushioning sheet evaluated by thermomechanical analysis (TMA),
S₂₅ is evaluated at an evaluation temperature of 25°C, and
S₂₅₀ is evaluated at an evaluation temperature of 250°C,
the compression strain S_{T} is determined by an equation S_{T} = (t₁ - t₀)/t₀ × 100 (%), where t₀ is a thickness of the heat-resistant cushioning sheet at 25°C and t₁ is a thickness of the heat-resistant cushioning sheet at the evaluation temperature T (°C) under a compression force applied by TMA in a thickness direction of the heat-resistant cushioning sheet.

In another aspect, the present invention provides a heat-resistant cushioning sheet configured to be disposed between a thermocompression face of a thermocompression apparatus and a target in thermocompression treatment of the target to prevent direct contact between the target and the thermocompression face, wherein
a thickness of the heat-resistant cushioning sheet at 25°C after hot pressing is greater than a thickness of the heat-resistant cushioning sheet at 25°C before the hot pressing, the hot pressing being performed for the heat-resistant cushioning sheet at a temperature of 250°C and an applied pressure of 20 MPa for a holding time of 3 minutes.

In still another aspect, the present invention provides a method for thermocompression treatment of a target with a thermocompression apparatus, the method including
performing the thermocompression treatment in a state where a heat-resistant cushioning sheet is disposed between the target and a thermocompression face of the apparatus to prevent direct contact between the target and the thermocompression face by the sheet, wherein
the heat-resistant cushioning sheet is the above heat-resistant cushioning sheet of the present invention.

### Advantageous Effects of Invention

In the heat-resistant cushioning sheet of the present invention, the compression strain change amount ΔS₂₅₀ being the difference S₂₅₀ - S₂₅ between the compression strain S₂₅ at 25°C and the compression strain S₂₅₀ at 250°C evaluated by TMA is -5% or more. This means that ease of deformation (the more easily the sheet deforms, the negatively greater the compression strain S_{T} is) of the sheet by a compression force applied in the thickness direction does not greatly increase at 250°C compared to at 25°C. In other words, this means that the sheet has high compression resistance in the thickness direction (shape retention in the thickness direction under compression) at high temperatures. Therefore, the heat-resistant cushioning sheet of the present invention can be more reliably adapted to expected further increases in treatment temperature and pressure.

### BRIEF DESCRIPTION OF DRAWINGS

FIG. 1 is a cross-sectional view schematically showing an example of a heat-resistant cushioning sheet of the present invention.
FIG. 2 is a schematic diagram for illustrating a method for evaluating a compression strain change amount ΔS₂₅₀ of a heat-resistant cushioning sheet.
FIG. 3 is a schematic diagram for illustrating an example of a method for hot-pressing a heat-resistant cushioning sheet.
FIG. 4 is a schematic diagram for illustrating an example of thermocompression treatment using the heat-resistant cushioning sheet of the present invention.
FIG. 5 shows appearances of heat-resistant cushioning sheets having undergone a hot pressing test A performed in EXAMPLES.
FIG. 6 shows appearances of heat-resistant cushioning sheets having undergone a hot pressing test B performed in EXAMPLES.

### DESCRIPTION OF EMBODIMENTS

Hereinafter, embodiments of the present invention will be described with reference to the drawings.

### [Heat-resistant cushioning sheet]

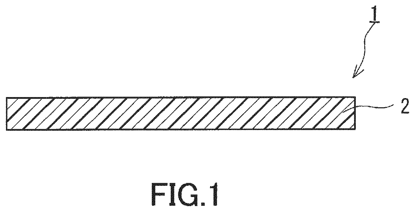

FIG. 1 shows an example of a heat-resistant cushioning sheet of the present invention. A heat-resistant cushioning sheet 1 shown in FIG. 1 is composed of a PTFE sheet 2. The heat-resistant cushioning sheet 1 of FIG. 1 has a single-layer structure composed of the PTFE sheet 2. The heat-resistant cushioning sheet 1 has high heat resistance and flexibility derived from PTFE included in the sheet 2. The heat-resistant cushioning sheet 1 not only prevents direct contact between a target (target to be treated) and a thermocompression face, but can have, depending on its specific embodiment, the thermocompression treatment type, the structure of a thermocompression apparatus, etc., a function of uniforming heat and/or pressure applied by the thermocompression face to the target and thereby adjusting rates of application of heat and/or pressure.

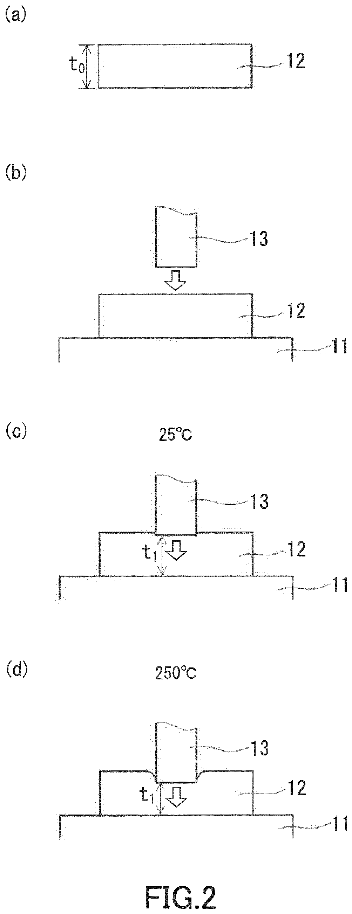

A compression strain change amount ΔS₂₅₀ being a difference S₂₅₀ - S₂₅ between a compression strain S₂₅ at 25°C and a compression strain S₂₅₀ at 250°C in the heat-resistant cushioning sheet 1 is -5% or more. The term "-5% or more" means -5% or a value positively greater than -5%. S₂₅ and S₂₅₀ are each a compression strain S_{T} of the heat-resistant cushioning sheet 1 evaluated by TMA. S₂₅ is evaluated at an evaluation temperature of 25°C, and S₂₅₀ is evaluated at an evaluation temperature of 250°C. The compression strain S_{T} is determined by an equation S_{T} = (t₁ - t₀)/t₀ × 100 (%), where t₀ is a thickness of the heat-resistant cushioning sheet 1 at 25°C and t₁ is a thickness of the heat-resistant cushioning sheet 1 at the evaluation temperature T (°C) under a compression force applied by TMA in a thickness direction of the heat-resistant cushioning sheet 1. The evaluation method will be specifically described with reference to FIG. 2.

A specimen 12 is prepared by cutting the heat-resistant cushioning sheet 1, and the thickness to thereof is measured at 25°C (FIG. 2(a)). The specimen 12 has a shape of, for example, a square or rectangle 5 to 10 mm on a short side. Next, the specimen 12 is placed on a stage 11 of a TMA apparatus maintained at 25°C, and a compression probe 13 is lowered (FIG. 2(b)). The compression probe 13 has a columnar shape and has a tip having a diameter of 1 mm. Then, while the TMA apparatus is kept maintained at 25°C, a pressure (5 MPa) is applied to the specimen 12 by the compression probe 13 in the thickness direction of the specimen 12 to measure the thickness t₁ of the specimen 12 at 25°C, and the compression strain S₂₅ is determined (FIG. 2(c)). Subsequently, while the applied pressure is kept maintained at 5 MPa, temperature rise measurement is started at a temperature rise rate of 5°C/min. The thickness t₁ of the specimen 12 is measured when the temperature reaches 250°C, and the compression strain S₂₅₀ is determined (FIG. 2(d)). The compression strain change amount ΔS₂₅₀ representing the difference between the determined compression strains S₂₅₀ and S₂₅ is calculated. The thickness t₁ representing the distance between a top surface of the stage 11 and the tip of the compression probe 13 can be determined using the TMA apparatus.

The compression strain change amount ΔS₂₅₀ may be -3% or more, -1% or more, 0% or more, 2% or more, or even 4% or more. The upper limit of the compression strain change amount ΔS₂₅₀ is, for example, 20% or less.

A compression strain change amount ΔS₃₀₀ being a difference S₃₀₀ -S₂₅ between the compression strain S₂₅ at 25°C and a compression strain S₃₀₀ at 300°C of the heat-resistant cushioning sheet 1 is, for example, -15% or more. In this case, the heat-resistant cushioning sheet 1 can be more reliably adapted to further increases in treatment temperature and pressure. The compression strain change amount ΔS₃₀₀ may be -10% or more, -5% or more, -3% or more, -1% or more, 0% or more, 2% or more, 3% or more, 4% or more, or even 5% or more. The upper limit of the compression strain change amount ΔS₃₀₀ is, for example, 20% or less. The compression strain change amount ΔS₃₀₀ may be positively greater than the compression strain change amount ΔS₂₅₀. The compression strain change amount ΔS₃₀₀ can be determined in the same manner as for the compression strain change amount ΔS₂₅₀ at evaluation temperatures T of 25°C and 300°C.

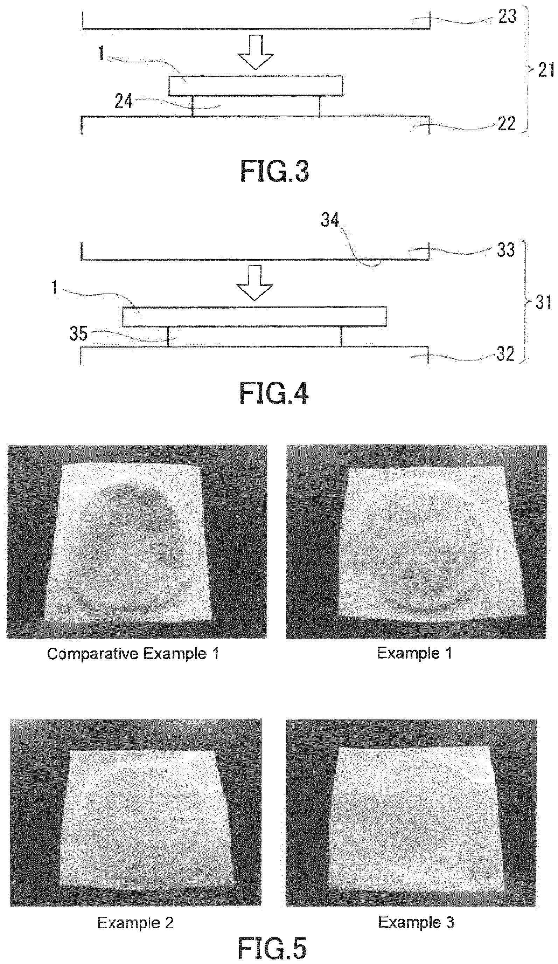

A thickness of the heat-resistant cushioning sheet 1 at 25°C after hot pressing may be greater than a thickness of the heat-resistant cushioning sheet 1 at 25°C before the hot pressing, the hot pressing being performed for the heat-resistant cushioning sheet 1 at a temperature of 250°C and an applied pressure of 20 MPa for a holding time of 3 minutes. This heat-resistant cushioning sheet 1 has a high shape retention in the thickness direction under high-temperature compression. The heat-resistant cushioning sheet 1 satisfying the above relation about the thickness before and after the hot pressing may or may not satisfy the above range(s) of the compression strain change amounts ΔS₂₅₀ and/or ΔS₃₀₀. The hot pressing of the heat-resistant cushioning sheet 1 is performed by hot-pressing the entire heat-resistant cushioning sheet 1 with a thermocompression head 23 in a state where a simulated target 24 is placed on a stage 22 of a hot pressing apparatus 21 and the heat-resistant cushioning sheet 1 is disposed on the simulated target 24 (refer to FIG. 3). It should be noted that the heat-resistant cushioning sheet 1 is disposed to cover the entire upper surface of the simulated target 24. Additionally, the hot pressing is performed after the temperature of the upper surface of the simulated target 24 reaches a setting temperature of the stage 22 (temperature of a top surface of the stage 22). Normally, a surface of the simulated target 24 in contact with the stage 22 and a surface thereof in contact with the heat-resistant cushioning sheet 1 are made of metal plates which are as smooth as the top surface of the stage 22 and the thermocompression face of the thermocompression head 23, respectively. The simulated target 24 typically has the shape of, a disc, a cube, or a cuboid. The area of the surface of the simulated target 24 in contact with the heat-resistant cushioning sheet 1 is preferably 15 cm² or more to ensure measurement accuracy. The simulated target 24 preferably has a thickness of 2 to 4 mm. The thickness of the heat-resistant cushioning sheet 1 is measured near the center of a pressing region of the sheet 1 (for example, within a 10 mm diameter circle).

A thickness increase rate IR_{T} (20 MPa) is, for example, 1% or more, the thickness increase rate IR_{T} being determined by an equation IR_{T} = (T₁ -T₀)/T₀ × 100 (%), where T₀ is the thickness of the heat-resistant cushioning sheet 1 at 25°C before the hot pressing and T₁ is the thickness of the heat-resistant cushioning sheet 1 at 25°C after the hot pressing. The thickness increase rate IR_{T} (20 MPa) may be 2% or more, 4% or more, 5% or more, 7% or more, or even 9% or more. The upper limit of the thickness increase rate IR_{T} (20 MPa) is, for example, 30% or less.

The thickness of the heat-resistant cushioning sheet 1 at 25°C after hot pressing may be greater than the thickness of the heat-resistant cushioning sheet 1 at 25°C before the hot pressing, the hot pressing being performed for the heat-resistant cushioning sheet 1 at a temperature of 250°C and an applied pressure of 30 MPa for a holding time of 3 minutes. The hot pressing can be performed in the same manner as when the applied pressure is 20 MPa. The thickness increase rate IR_{T} (30 MPa) is, for example, 1% or more and may be 2% or more, 3% or more, 4% or more, or even 5% or more. The upper limit of the thickness increase rate IR_{T} (30 MPa) is, for example, 20% or less.

The heat-resistant cushioning sheet 1 of FIG. 1 is formed of the PTFE sheet 2. However, a resin included in the heat-resistant cushioning sheet 1 is not limited to PTFE. The resin may be a fluorine resin. In other words, the heat-resistant cushioning sheet 1 may include a sheet made of a fluorine resin. Examples of the fluorine resin include PTFE, a modified PTFE, an ethylene-tetrafluoroethylene copolymer (ETFE), a tetrafluoroethylene-hexafluoropropylene copolymer (FEP), a tetrafluoroethylene-perfluoroalkylvinyl ether copolymer (PFA), and polyvinylidene fluoride (PVDF). The fluorine resin is preferably PTFE, a modified PTFE, or ETFE and particularly preferably PTFE or a modified PTFE because of their particularly high heat resistance and flexibility.

The modified PTFE is a copolymer of TFE and a modified comonomer. To be classified as a modified PTFE, a content of a tetrafluoroethylene (TFE) unit in the copolymer is required to be 99 mass% or more. The modified PTFE is, for example, a copolymer of TFE and at least one modified comonomer selected from the group consisting of ethylene, perfluoroalkylvinyl ether, and hexafluoropropylene.

The PTFE sheet 2 is preferably a sintered PTFE sheet including PTFE having been sintered. In the present specification, sintering of PTFE means heating of PTFE obtained by polymerization to a temperature equal to or higher than its melting point (327°C), for example, to 340 to 380°C.

The thickness of the heat-resistant cushioning sheet 1 is, for example, 10 µm or more and may be 50 µm or more, 100 µm or more, 250 µm or more, 300 µm or more, 400 µm or more, or even 500 µm or more. The upper limit of the thickness is, for example, 2000 µm or less and may be 1500 µm or less or even 1000 µm or less.

Though the tensile strength varies depending on the type of the resin included in the heat-resistant cushioning sheet 1, a tensile strength of the heat-resistant cushioning sheet 1 is, for example, 30 MPa or more in MD (which commonly refers to a longitudinal direction in the case of a strip-shaped sheet) and may be 40 MPa or more, 50 MPa or more, 60 MPa or more, 70 MPa or more, 80 MPa or more, 90 MPa or more, or even 100 MPa or more in MD. The tensile strength is, for example, 10 MPa or more in TD (which commonly refers to a width direction in the case of a strip-shaped sheet) and may be 15 MPa or more, 20 MPa or more, 25 MPa or more, 30 MPa or more, 35 MPa or more, 40 MPa or more, or even 45 MPa or more in TD. The upper limit of the tensile strength is, for example, 500 MPa or less. The heat-resistant cushioning sheet 1 having a tensile strength in the above range can be, for example, more reliably and stably fed between a thermocompression face and a target by conveyance.

Though the tensile elongation varies depending on the type of the resin included in the heat-resistant cushioning sheet 1, a maximum tensile elongation of the heat-resistant cushioning sheet 1 is, for example, 300% or less in MD and may be 275% or less, 250% or less, 225% or less, 200% or less, 180% or less, 160% or less, 140% or less, 120% or less, 100% or less, 90% or less, or even 80% or less in MD. The lower limit of the maximum tensile elongation is, for example, 5% or more in MD. The maximum tensile elongation is, for example, 200% or more in TD and may be 400% or more, 410% or more, 420% or more, 425% or more, 430% or more, 435% or more, or even 440% or more in TD. The upper limit of the maximum tensile elongation is, for example, 700% or less in TD. By virtue of the heat-resistant cushioning sheet 1 having a maximum tensile elongation in MD in the above range, particularly the heat-resistant cushioning sheet 1 having a maximum tensile elongation of 200% or less in MD, for example, when the heat-resistant cushioning sheet 1 partially adheres to a thermocompression face and/or a target at the time of feeding the heat-resistant cushioning sheet 1 between the thermocompression face and the target by conveyance, the sheet 1 can be prevented from elongating to follow these members. In other words, successive feeding of the heat-resistant cushioning sheet 1 for thermocompression treatment can be achieved more efficiently.

The tensile strength and the maximum tensile elongation of the heat-resistant cushioning sheet 1 can be determined by a tensile test using a tensile testing machine. A specimen has, for example, the shape of a No. 3 dumbbell defined in Japanese Industrial Standards (JIS) K 6251: 1993. When the above specimen is used, the measurement conditions are, for example, as follows: the test length of the dumbbell of the specimen is 20 mm, the chuck-to-chuck distance is 35 mm, and the tensile rate is 200 mm/min. The maximum tensile elongation can be calculated from the above pre-test (original) test length of the dumbbell and the test length of the dumbbell at break. The measurement temperature is, for example, 25 ± 10°C.

A dimensional change rate of the heat-resistant cushioning sheet 1 (a dimensional change rate obtained by leaving the heat-resistant cushioning sheet 1 in an atmosphere at 270°C for 1 hour without applying a pressure; the same applies hereinafter) is, for example, -5.0% or less in MD and may be -7.5% or less, -10.0% or less, -12.5% or less, -15.0% or less, or even -17.5% or less in MD. The lower limit of the dimensional change rate is, for example, -30.0% or more in MD. The dimensional change rate is, for example, 1.5% or less in TD and may be 1.3% or less, 1.0% or less, 0.7% or less, 0.5% or less, 0.3% or less, or even 0% or less in TD. The lower limit of the dimensional change rate is, for example, -2.0% or more in TD. The dimensional change rate is, for example, 5.0% or more in the thickness direction and may be 7.5% or more, 10.0% or more, 12.5% or more, 15.0% or more, 17.5% or more, or even 20.0% or more in the thickness direction. The upper limit of the dimensional change rate is, for example, 40.0% or less in the thickness direction. It should be noted that the dimensional change rate can be given by an equation (X₁ -X₀)/X₀ × 100 (%). X₀ represents a dimension before the heating, and X₁ represents a dimension after the heating.

In the heat-resistant cushioning sheet 1, another layer may be disposed on at least one of principal surfaces thereof. However, when a good heat conductivity is required of the heat-resistant cushioning sheet 1, it is preferred that no other layer be disposed on the principal surfaces thereof. In other words, the heat-resistant cushioning sheet 1 may be a single layer.

The heat-resistant cushioning sheet 1 is preferably a non-porous sheet. The heat-resistant cushioning sheet 1 may be an imperforate sheet having no hole communicating both principal surfaces thereof at least in a region of use. The heat-resistant cushioning sheet 1 may be an impermeable sheet that allows no fluid, such as water, to permeate therethrough in the thickness direction because of high liquid repellency (water repellency and oil repellency) of the material, such as PTFE, included in the sheet 1. Alternatively, the heat-resistant cushioning sheet 1 may be an insulating sheet (a nonconductive sheet) because of a high insulating property of the material, such as PTFE, included in the sheet 1. The insulating property is expressed, for example, by a surface resistivity of 1 × 10¹⁴ Ω/□ or more. The surface resistivity may be 1 × 10¹⁵ Ω/□ or more, 1 × 10¹⁶ Ω/□ or more, or even 1 × 10¹⁷ Ω/□ or more. The heat-resistant cushioning sheet 1 may include an electrically conductive material such as carbon black. In this case, the heat-resistant cushioning sheet 1 can have a function, such as an antistatic function, derived from the electrically conductive material. The surface resistivity of the heat-resistant cushioning sheet 1 including the electrically conductive material is, for example, 1 × 10¹² Ω/□ or less and may be 1 × 10⁸ Ω/□ or less or 1 × 10⁴ Ω/□ or less.

The heat-resistant cushioning sheet 1 is in the shape of, for example, a polygon such as a square or a rectangle, a circle, an oval, or a strip. The polygon may have a rounded corner. The shape of the heat-resistant cushioning sheet 1 is, however, not limited to these examples. The polygonal-shaped, circular-shaped, or oval-shaped heat-resistant cushioning sheet 1 can be distributed in the form of a sheet, and the strip-shaped heat-resistant cushioning sheet 1 can be distributed in the form of a wound body (roll) formed of the sheet 1 wound around a winding core. The width of the strip-shaped heat-resistant cushioning sheet 1 and that of the wound body formed of the strip-shaped wound heat-resistant cushioning sheet 1 can be set to any values.

### [Method for manufacturing heat-resistant cushioning sheet]

An example of the method for manufacturing the heat-resistant cushioning sheet 1 will be described hereinafter using as an example the heat-resistant cushioning sheet 1 formed of the PTFE sheet 2 or a modified PTFE sheet. However, the method for manufacturing the heat-resistant cushioning sheet 1 is not limited to the following example.

First, a PTFE powder (molding powder) is charged into a mold, and a given pressure is applied to the powder in the mold for a given period of time to preform the powder. The preforming can be performed at ordinary temperature. The internal space of the mold preferably has a columnar shape so that the below-described cutting using a cutting lathe can be performed. In that case, a columnar preform and a columnar PTFE block can be obtained. When the PTFE block has a columnar shape, a cutting lathe, which continuously rotates the block and cuts a surface thereof, can be used and the heat-resistant cushioning sheet 1 can be efficiently formed. Next, the resulting preform is taken out of the mold and sintered at a temperature equal to or higher than the melting point (327°C) of PTFE for a given period of time to obtain a PTFE block. Subsequently, the obtained PTFE block is cut to a given thickness to obtain a PTFE sheet that is a cut sheet. The obtained PTFE sheet is calendered to obtain the PTFE sheet 2 being a calendered sheet. The obtained PTFE sheet 2 may be directly used as the heat-resistant cushioning sheet 1, or may be used as the heat-resistant cushioning sheet 1, for example, after a given treatment or after laminated with another layer. The calendering is typically uniaxial calendering in MD. For the calendering, a roll calendering machine equipped with a pair of metal rolls can be used. A calendering ratio is, for example, 1.5 or more in terms of thickness and may be 1.8 or more, 2.0 or more, 2.3 or more, 2.5 or more, 2.8 or more, or even 3.0 or more in terms of thickness. The upper limit of the calendering ratio is, for example, 10.0 or less. The calendering temperature is, for example, 100 to 200°C and may be 200 to 300°C or even 300°C or higher. By the above manufacturing method, the thickness of the heat-resistant cushioning sheet 1 to be formed is relatively easily controlled, and, moreover, the heat-resistant cushioning sheet 1 can be formed in the shape of a strip. Furthermore, a modified PTFE sheet can be formed by the above method with the use of a modified PTFE powder instead of the PTFE powder.

### [Use of heat-resistant cushioning sheet]

As shown in FIG. 4, the heat-resistant cushioning sheet 1 can be used as a heat-resistant cushioning sheet disposed between a thermocompression face 34 of a thermocompression apparatus 31 and a target 35 in thermocompression treatment of the target 35 with the thermocompression apparatus 31 to prevent fixation between the thermocompression face 34 and the target 35. The heat-resistant cushioning sheet 1 can have a high cushioning ability. The thermocompression apparatus 31 of FIG. 4 includes a stage 32 and a thermocompression head 33 having the thermocompression face 34. The heat-resistant cushioning sheet 1 is disposed between the thermocompression head 33 and the target 35. The thermocompression treatment in this example is performed by bringing the thermocompression head 33 and the stage 32 closer to each other, or typically by lowering the thermocompression head 33, with the target 35 placed on the stage 32. The thermocompression treatment is, for example, thermocompression bonding or hot pressing of the target 35.

The heat-resistant cushioning sheet 1 may be fed and disposed between the thermocompression face 34 and the target 35 by conveyance. The heat-resistant cushioning sheet 1 fed and disposed by conveyance is, for example, in the shape of a strip.

In the thermocompression treatment, a temperature set for heating the thermocompression apparatus 31, in other words, a use temperature of the heat-resistant cushioning sheet 1, is, for example, 200°C or higher and may be 225°C or higher, 250°C or higher, 275°C or higher, or even 300°C or higher. The upper limit of the use temperature is, for example, 330°C or less. In the thermocompression treatment, a pressure set for compressing the thermocompression apparatus 31, in other words, the use pressure of the heat-resistant cushioning sheet 1, is, for example, 10 MPa or more and may be 15 MPa or more, 20 MPa or more, 25 MPa or more, or even 30 MPa or more. The upper limit of the use pressure is, for example, 50 MPa or less. It should be noted that the use temperature and the use pressure of the heat-resistant cushioning sheet 1 are not limited to the above ranges. The heat-resistant cushioning sheet 1 can also be used at a use temperature and/or a use pressure lower than the above range(s).

### [Thermocompression treatment method]

Thermocompression treatment of the target 35 can be performed using the heat-resistant cushioning sheet 1 of the present invention. The method for the thermocompression treatment is a method for thermocompression treatment of the target 35 with a thermocompression apparatus. In the thermocompression treatment method, the thermocompression treatment is performed in a state where the heat-resistant cushioning sheet 1 is disposed between the target 35 and the thermocompression face 34 to prevent direct contact between the target 35 and the thermocompression face 34 by the sheet 1. The heat-resistant cushioning sheet 1 can be fed and disposed between the target 35 and the thermocompression face 34, for example, by conveyance.

### [Method for manufacturing thermo-compressed body]

A thermo-compressed body can be manufactured using the heat-resistant cushioning sheet 1 of the present invention. The manufacturing method includes a step of obtaining a thermo-compressed body of the target 35 by performing thermocompression treatment in a state where the heat-resistant cushioning sheet 1 is disposed between the target 35 and the thermocompression face 34 to prevent direct contact between the target 35 and the thermocompression face 34 by the sheet 1. The thermocompression treatment is, for example, thermocompression bonding or hot pressing of the target 35, and a thermocompression-bonded body or a hot-pressed body can be obtained thereby.

### EXAMPLES

The present invention will be described in more detail by examples. The present invention is not limited to the examples given below.

First, methods for evaluating heat-resistant cushioning sheets produced in EXAMPLES will be described.

### [Thickness]

The thickness was determined as an average of values measured at any 3 points at 25°C with a digital micrometer (minimum increment: 0.001 mm).

### [Compression strain change amount]

The compression strain change amounts ΔS₂₅₀ and ΔS₃₀₀ were determined by the above-described method. A specimen used for TMA was in the shape of a square having a size of 5 mm × 5 mm. TMA4000SA manufactured by Bruker Corporation was used as a TMA apparatus.

### [Hot pressing test of simulated target]

### <Test A>

A circular stainless steel plate A having a diameter of 47 mm and a thickness of 3 mm was placed as a simulated hot pressing target (simulated target) 24 on the stage 22 of the hot pressing apparatus 21 including the stage 22 and the thermocompression head 23 (refer to FIG. 3). The setting temperature of the stage 22 was 250°C. After the temperature of the upper surface of the simulated target 24 reached the setting temperature of the stage 22, a 60 mm × 60 mm square cut out of the heat-resistant cushioning sheet 1 to be evaluated was placed on the simulated target 24 and then immediately the thermocompression head 23 was lowered to perform a hot pressing test at a temperature of 250°C and an applied pressure of 20 MPa or 30 MPa for a holding time of 3 minutes. The heat-resistant cushioning sheet 1 was disposed to cover the entire upper surface of the simulated target 24. After the test, the heat-resistant cushioning sheet 1 was cooled to 25°C and then removed from the stainless steel plate A. The heat-resistant cushioning sheet 1 having undergone the test was evaluated for the thickness and the appearance at 25°C. The thickness was measured near the center of the heat-resistant cushioning sheet 1 (within a 10 mm diameter circle). FIG. 5 shows appearances of heat-resistant cushioning sheets having undergone the test.

### <Test B>

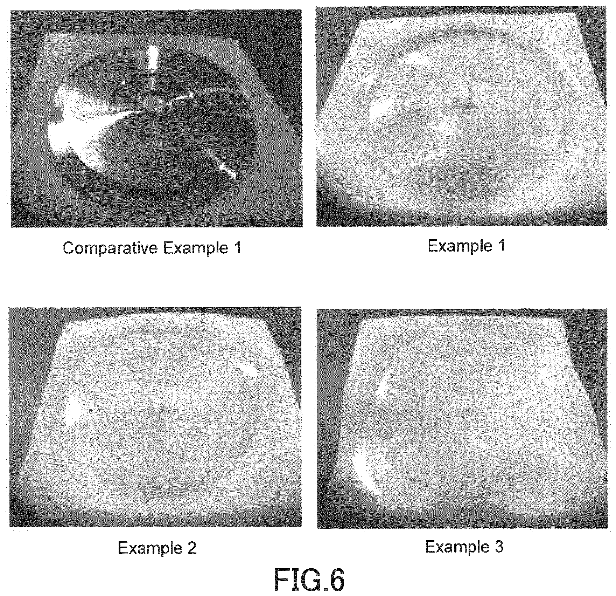

A hot pressing test was performed in the same manner as in the test A, except that a stainless steel plate B (in the shape of a circle having a diameter of 47 mm and a thickness of 4 mm and provided at the center with a 2 mm diameter through hole extending in a thickness direction) was used as the simulated target 24 instead of the stainless steel plate A. The applied pressure was 30 MPa. After the test, the heat-resistant cushioning sheet 1 was cooled to 25°C and then removed from the stainless steel plate B. An amount of penetration of the heat-resistant cushioning sheet 1 into the through hole of the stainless steel plate B was evaluated. A caliper was used to measure the amount of penetration. FIG. 6 shows appearances of heat-resistant cushioning sheets having undergone the test. In Comparative Example 1, it was impossible to remove the heat-resistant cushioning sheet from the stainless steel plate B because penetrated PTFE reached the back side of the stainless steel plate B (refer to FIG. 6) (Only for Comparative Example 1, FIG. 6 shows the back side of the stainless steel plate B).

### [Tensile strength and maximum tensile elongation]

The tensile strength (tensile strength at break) and the maximum tensile elongation were determined by a tensile test using a tensile testing machine (AG-I manufactured by Shimadzu Corporation). The evaluation was performed in both the longitudinal direction (MD) and the width direction (TD) of each heat-resistant cushioning sheet. Specimens had the shape of a No. 3 dumbbell (the test length of the dumbbell: 20 mm) defined in JIS K 6251: 1993. The measurement conditions were as follows: the measurement temperature was 25°C, the chuck-to-chuck distance was 35 mm, and the tensile rate was 200 mm/min. The maximum tensile elongation was calculated from the above pre-test (original) test length of the dumbbell and the test length of the dumbbell at break.

### [Dimensional change rate]

Each heat-resistant cushioning sheet to be evaluated was left in a heating bath at 270°C for 1 hour, cooled to 25°C, and then measured for its dimensions to evaluate the dimensional change rate by heating. A caliper was used to measure the dimensions. The evaluation was performed in MD, TD, and the thickness direction of the heat-resistant cushioning sheets. It should be noted that the dimensional change rate was evaluated without applying a pressure to the heat-resistant cushioning sheets.

### (Comparative Example 1)

A PTFE powder (POLYFLON PTFE M-12 manufactured by DAIKIN INDUSTRIES, LTD.) was charged into a cylindrical mold and preformed at a temperature of 23°C and a pressure of 8.5 MPa for a pressure application time of 1 hour. Next, the resulting preform was taken out of the mold and sintered at 370°C for 24 hours to obtain a columnar PTFE block having a height of 300 mm and an outer diameter of 470 mm. Then, the obtained PTFE block was cut using a cutting lathe to produce a cut PTFE sheet (thickness: 486 µm), which was employed as a heat-resistant cushioning sheet of Comparative Example 1.

### (Example 1)

A PTFE block produced as in Comparative Example 1 was cut using a cutting lathe to obtain a cut PTFE film. Next, the obtained cut film was calendered in MD using a roll calendering machine equipped with a pair of metal rolls maintained at 175°C to produce a calendered PTFE film (thickness: 508 µm), which was employed as a heat-resistant cushioning sheet of Example 1. The calendering ratio was 2.0 in terms of thickness.

### (Example 2)

A calendered PTFE film (thickness: 497 µm) was produced as a heat-resistant cushioning sheet of Example 2 in the same manner as in Example 1, except that the calendering ratio was 2.5 in terms of thickness.

### (Example 3)

A calendered PTFE film (thickness: 500 µm) was produced as a heat-resistant cushioning sheet of Example 3 in the same manner as in Example 1, except that the calendering ratio was 3.0 in terms of thickness.

The evaluation results are collectively shown in Table 1 below.

**[Table 1]**

| | | Comparative Example 1 | Example 1 | Example 2 | Example 3 |
|---|---|---|---|---|---|
| Calendering rate (in terms of thickness) | | Not calendered | 2.0 | 2.5 | 3.0 |
| Thickness (25°C) [µm] | | 486 | 508 | 497 | 500 |
| Compression strain change amount [%] | ΔS₂₅₀ | -11.6 | -0.7 | 2.8 | 4.0 |
| | ΔS₃₀₀ | -38.7 | -4.5 | 3.4 | 6.7 |
| Thickness after hot pressing test A (25°C) [µm] | 20 MPa | 375 | 519 | 542 | 546 |
| | 30 MPa | 308 | 433 | 514 | 529 |
| Amount of penetration after hot pressing test B [mm] | | Over 4.0 | 4.0 | 2.0 | 1.0 |
| Tensile strength [MPa] | MD | 41 | 78 | 96 | 101 |
| | TD | 32 | 40 | 44 | 41 |
| Maximum tensile elongation [%] | MD | 355 | 162 | 100 | 75 |
| | TD | 393 | 430 | 425 | 458 |
| Dimensional change rate [%] (Test condition: at 270°C for 1 hour) | MD | -4.0 | -15.5 | -17.8 | -18.3 |
| | TD | 1.4 | 1.3 | 0.3 | 0.0 |
| | Thickness direction | 3.3 | 16.6 | 21.1 | 21.7 |

As shown in Table 1, the compression strain change amounts ΔS₂₅₀ and ΔS₃₀₀ of Examples 1 to 3, particularly ΔS₃₀₀, are positively greater than those of Comparative Example 1. That is, the heat-resistant cushioning sheets of Examples 1 to 3 have a high compression resistance in the thickness direction at high temperatures. Moreover, in the actual hot pressing tests of the heat-resistant cushioning sheets, a decrease in thickness thereof was reduced (even an increase in thickness happened) and sheet deformation including penetration into the through holes was reduced (refer to FIGS. 5 and 6). It is inferred from the results of measuring the dimensional change rate that the above properties are attributed to release of compression stress in the sheets by heat, the compression stress being caused in the thickness direction by calendering at the time of manufacture.

### INDUSTRIAL APPLICABILITY

The heat-resistant cushioning sheet of the present invention can be disposed between a thermocompression face of a thermocompression apparatus and a target in thermocompression treatment of the target to prevent direct contact between the target and the thermocompression face. The thermocompression treatment is, for example, thermocompression bonding or hot pressing.

## Claims

1. A heat-resistant cushioning sheet configured to be disposed between a thermocompression face of a thermocompression apparatus and a target in thermocompression treatment of the target to prevent direct contact between the target and the thermocompression face, wherein
a compression strain change amount ΔS₂₅₀ being a difference S₂₅₀ - S₂₅ between a compression strain S₂₅ at 25°C and a compression strain S₂₅₀ at 250°C is -5% or more,
S25 and S₂₅₀ are each a compression strain S_{T} of the heat-resistant cushioning sheet evaluated by thermomechanical analysis (TMA),
S₂₅ is evaluated at an evaluation temperature of 25°C, and
S₂₅₀ is evaluated at an evaluation temperature of 250°C,
the compression strain S_{T} is determined by an equation S_{T} = (t₁ - t₀)/t₀ × 100 (%), where t₀ is a thickness of the heat-resistant cushioning sheet at 25°C and t₁ is a thickness of the heat-resistant cushioning sheet at the evaluation temperature T (°C) under a compression force applied by TMA in a thickness direction of the heat-resistant cushioning sheet.

2. A heat-resistant cushioning sheet configured to be disposed between a thermocompression face of a thermocompression apparatus and a target in thermocompression treatment of the target to prevent direct contact between the target and the thermocompression face, wherein
a thickness of the heat-resistant cushioning sheet at 25°C after hot pressing is greater than a thickness of the heat-resistant cushioning sheet at 25°C before the hot pressing, the hot pressing being performed for the heat-resistant cushioning sheet at a temperature of 250°C and an applied pressure of 20 MPa for a holding time of 3 minutes.

3. The heat-resistant cushioning sheet according to claim 1 or 2, comprising a sheet made of a fluorine resin.

4. The heat-resistant cushioning sheet according to claim 3, wherein
the fluorine resin is polytetrafluoroethylene (PTFE) or a modified PTFE, and
a content of a tetrafluoroethylene (TFE) unit in the modified PTFE is 99 mass% or more.

5. A method for thermocompression treatment of a target with a thermocompression apparatus, the method comprising
performing the thermocompression treatment in a state where a heat-resistant cushioning sheet is disposed between the target and a thermocompression face of the apparatus to prevent direct contact between the target and the thermocompression face by the sheet, wherein
the heat-resistant cushioning sheet is the heat-resistant cushioning sheet according to any one of claims 1 to 4.
